# EUROPEAN PATENT SPECIFICATION

(11) **EP 0 589 560 B1**
(45) Date of publication and mention of the grant of the patent: **22.10.1997**
(21) Application number: 93306229.1
(22) Date of filing: 06.08.1993
(51) Int. Cl.: H01R 13/66, H01Q 1/50

(54) **Electrical overstress protection apparatus**
Vorrichtung zum Schutz gegen elektrische Überbeanspruchung
Dispositif contre les surcharges électriques

(30) Priority: 23.09.1992 US 949655
(43) Date of publication of application: 30.03.1994
(73) Proprietor: THE WHITAKER CORPORATION, Wilmington, Delaware 19808 (US); ELECTROMER CORPORATION, Palo Alto, California 94303 (US)
(72) Inventor: Anastasio, Paul Joseph, Camp Bill, Pennsylvania 17011 (US); English, James Marsh, Abbville, Pennsylvania 17003 (US); Farrar, John Charles, Harrisburg, Pennsylvania 17112 (US); Goel, Ram Parkash, Camp Hill, Pennsylvania 17011 (US); Collins, Christopher J., Fremont, California 94536 (US); Janoss, Bernard John, Harrisburg, Pennsylvania 17011 (US); Childers, Richard Kendall, Redwood City, California 94061 (US); Bunch, John Hilary, Menlo Park, California 94025 (US)
(74) Representative: Warren, Keith Stanley

(56) References cited:
- EP-A- 0 470 031
- DE-A- 3 729 013
- US-A- 4 272 754
- US-A- 4 333 861
- US-A- 5 089 929

## Description

This invention relates to an electrical overstress protection apparatus for protecting voltage sensitive components.

Miniaturization of electronic components, such as integrated circuits, finds extremely small conductive traces spaced on close centers to make such components vulnerable to voltage spikes or transients that represent overvoltages present in the signals transmitted to such components. Excessive voltages cause overstress to such components and result in damage or destruction, and a resulting failure of function. Excessive voltages come in many forms caused from many sources ranging from electrostatic build-up that can exceed 15,000 volts to induced voltages caused by lightning strike or an accidental engagement with a high voltage line. US-A-4,726,638 granted February 23, 1988 is drawn to a transient suppression assembly wherein bi-directional diodes are incorporated into an electrical connector, the diodes having voltage breakdown characteristics to shunt excessive voltage levels to ground circuits associated with such connector. As will be discerned from such patent, the addition of diodes and the necessary substrates associated therewith, disadvantageously takes up space inside the connector and requires the handling of a number of discrete components such as the diodes.

In US-A-4,726,991 granted February 23, 1988, an electrical overstress protection material is disclosed comprised of a matrix formed of a mixture of conductive and semi-conductive particles coated with insulating material to provide chains within the matrix which act in the presence of excessive voltage to conduct the unwanted voltage levels to ground and to clamp the related circuits at a given lower voltage. US-A-4 977 357 is drawn to a further overvoltage protection material and to an over voltage protection device that allows very small dimensional structures to be used in component overvoltage and overstress protection.

The present invention has as an object an improvement over prior art overvoltage protection devices that allows a simplification of structure, particularly for multi-contact connectors or circuits. The invention has as a further object an improved overvoltage protection apparatus that provides, in a single structure, an integrated overvoltage protection applicable to multiple contacts in relation to a use in connectors or circuits.

The present invention consists in the combination defined in claim 1.

There is disclosed herein apparatus that features a use of a matrix material that has voltage breakdown characteristics capable of accommodating a wide range of voltages and responding rapidly to alter resistance, assuming that voltage transients above levels that would overstress components are grounded. The material is packaged in a controlled way to be inserted between signal and ground paths in connectors, circuits, and the like. The material matrix is of the type described in the aforementioned US-A-4 726 991 and US-A-4 977 357 having a complete description of the types of materials contemplated for use, along with characteristics of performance. A material carrier is formed of a thin dielectric sheet having holes or apertures therein filled with matrix material, and laminated between signal and ground paths or electrodes that may be foils or electrodeposited areas in turn connected to signal contacts and ground contacts or elements. The resulting structure is quite thin, and through a selection of sheet thickness and hole or aperture diameter or dimension, in conjunction with the particular matrix material, characteristics related to voltage breakdown, an alteration of resistance, and capacity to handle energy may be controlled.

There is provided, in one embodiment, a thin sheet of dielectric material, such as a polyester or polyimide or polyamide film, having holes punched in an array filled with matrix material to cumulatively provide the necessary surface area between electrodes, along with the necessary thickness of material and to thus provide a handleable element readily installed on a printed circuit board or in a connector, or therebetween. In one embodiment, the element is shown disposed on a printed circuit board with the signal paths formed by conductive traces as a part of the board and with the sheet carrying the matrix material laminated thereto and a ground path extended over the sheet of material to be in intimate contact with the matrix material. In such embodiment, a connector, including signal contacts and a ground path is applied to the printed circuit board with the signal contacts being joined to the signal paths and to the ground path as by solder or other suitable interconnection techniques.

In another embodiment, the electrical overstress protection element is fitted to the connector housing, on the bottom, with the signal contacts penetrating the element and being soldered to the various signal and ground paths forming electrodes for the element. In yet another embodiment, a right-angle version of the connector is employed with the element on the bottom surface of the connector housing.

Equivalent means are contemplated, for regulating or controlling the thickness and volume of the matrix material, such as for example, a sheet formed by weaving of threads of insulating materials such as for example silk or synthetic fiber, with the interstices forming holes to accommodate the matrix material in an appropriate thickness and volume. Also contemplated is nonwoven fabric, and also fabric such as of ceramic or refractory fibers.

Embodiments of the present invention will now be described by way of example with reference to the accompanying drawings in which:
FIGURE 1 is a perspective showing overstress prevention apparatus on a printed circuit board with a connector positioned thereabove prior to installation on such board;
FIGURE 2 is an alternative embodiment showing a different arrangement of the electrical overstress protection element in relation to a printed circuit board;
FIGURE 3 is an enlarged perspective view, partially sectioned, showing a single hole of the dielectric sheet of the element containing transient suppression material therein;
FIGURE 4 is a perspective view of the element of the invention showing two contact accommodating holes;
FIGURE 5 is a perspective showing the element of FIG. 4 having contacts fitted therein;
FIGURE 6 is a elevational, partially sectioned view showing one embodiment of the inventive connector and element forming an apparatus relative to a printed circuit board upon which the connector is mounted;
FIGURE 7 is an elevational, partially sectioned view showing the connector in a different embodiment in relation to a printed circuit board;
FIGURE 8 is a voltage/time plot depicting the characteristics of an overstress prevention device relative to an overvoltage pulse; and
FIGURE 9 is another embodiment of thin element, comprising fabric impregnated with transient suppression material.

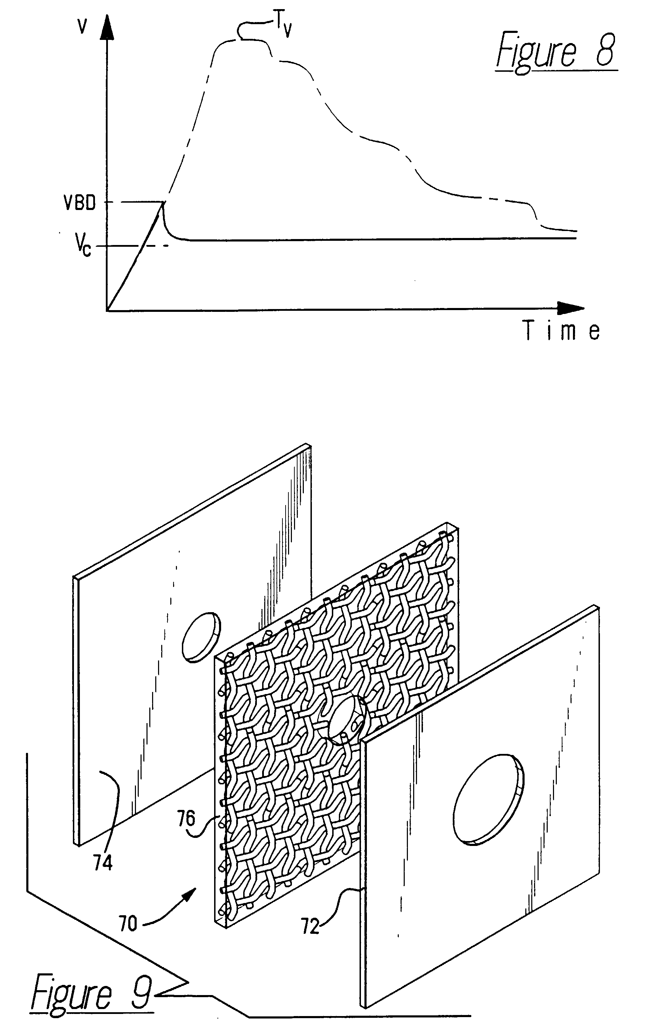

Referring first to FIG. 8, a voltage/time plot is shown with a transient pulse Tᵥ, which may be considered to be of a voltage level and an energy content in excess to that which a given component, such as an integrated circuit, can withstand without damage or destruction. The voltage transient Tᵥ may appear on a signal line caused by a wide variety of reasons ranging from the buildup of static charges on personnel or equipment, voltages induced by lightning or accidental shorting of higher voltage supplies or devices, or voltages induced in collateral circuits due to a sudden voltage surge resulting from the closure of switches or the opening of switches to start up or shut down electrical equipment. Most typically, such voltage transients Tᵥ appear on cables or conductors and connectors utilized for transmitting signals to electronic components, such as integrated circuits that manipulate data and perform various logic functions to in turn control computational transmission equipment.

The voltage Tᵥ may be as much as many thousands of volts or as little as less than a hundred volts; electronic components, such as integrated circuits, typically operating in a range of between 3 and 12 volts, with some devices operating slightly higher. The time of response shown in FIG. 8 may represent a period as small as a few nanoseconds, with the rise time of Tᵥ representing several nanoseconds, and/or milliseconds. The area under the curve represented by Tᵥ represents the joule energy of the pulse, another necessary consideration in terms of protection from overvoltage and the resulting overstress of components. It is necessary then to examine both the need for overvoltage protection and excessive energy represented by Tᵥ for the given components being protected. Once this is done, a particular specification of protection device, in terms of voltage breakdown, to shunt unwanted transients to ground and a clamping voltage may be chosen. In FIG. 8, V_{BD} represents a breakdown of voltage for a given protection device, and V_{c} represents the clamping voltage that the device will hold indefinitely in the presence of excessive voltages.

An electrical overstress protection apparatus or device is contemplated in the form of an element that can be applied between signal paths and ground paths, the element having characteristics adjusted in accordance with the demands for protection as illustrated in FIG. 8. In other words, the device will operate to open up a path by dropping resistance between a signal path and a ground path with a characteristic V_{BD} and a characteristic V_{c} as indicated in FIG. 8.

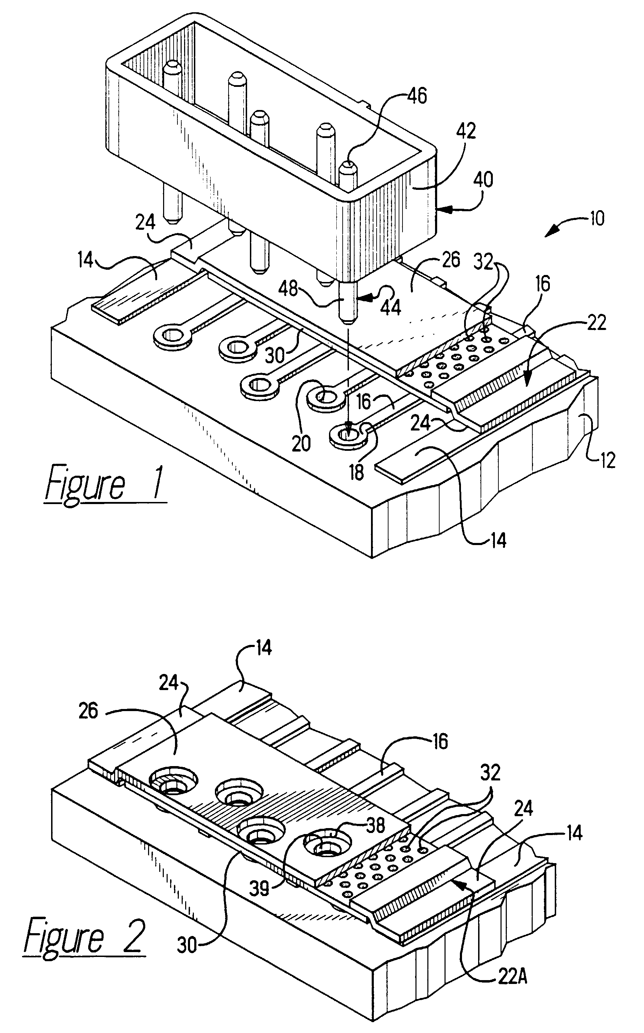

Referring now to FIG. 1, an assembly 10 is shown to include a printed circuit board 12, a connector 40 positioned thereover, and the electrical overstress protection element 22 attached to the upper surface of board 12. As can be seen in FIGS. 1 and 2, the board upper surface includes a series of conductive traces 16 and 14, typically applied thereto by etching away copper and plating the remaining material with a suitable surface finish, or through the use of silk screening or other techniques followed by electroless and/or electrodeposited materials to provide an added thickness of trace and adequate conductivity for the currents of signals carried on such traces. Traces 14 are ground buses and traces 16 are signal traces. The spacing between traces is made to provide, in conjunction with the dielectric material of the circuit board 12, an adequate voltage withstanding resistance. As can be seen, the traces 16 end in a staggered row with trace material 18 defining a conductive ring or periphery surrounding an aperture or hole 20 extending through the board. It is to be understood that holes 20 are typically plated through with tin-lead alloy to join traces within the board, in laminations in board 12 that go to and come from various components (not shown) on the board.

The electrical overstress protection element 22, shown considerably enlarged in terms of thickness for clarity, includes an upper conductive foil element 26 terminated at the ends 24 to the ground buses 14 on the upper surface of board 12 such as by solder or other suitable means. The foil 26 has a given area, to be further explained, and is part of a lamination that includes a dielectric member in the form of a film or sheet 30 that is positioned directly against the surfaces of traces 16 and against 26. Films such as KAPTON and MYLAR (trademarks of E. I. DuPont de Nemours & Co.) or alternate versions of polyamide, polyimide and polyester films have suitable dielectric qualities for use with the present invention. The film 30 is relatively much thinner than shown, films on the order of between 0.00508 cm (0.002 inches) or slightly less up to on the order of 0.254 cm (0.10 inches) may be employed.

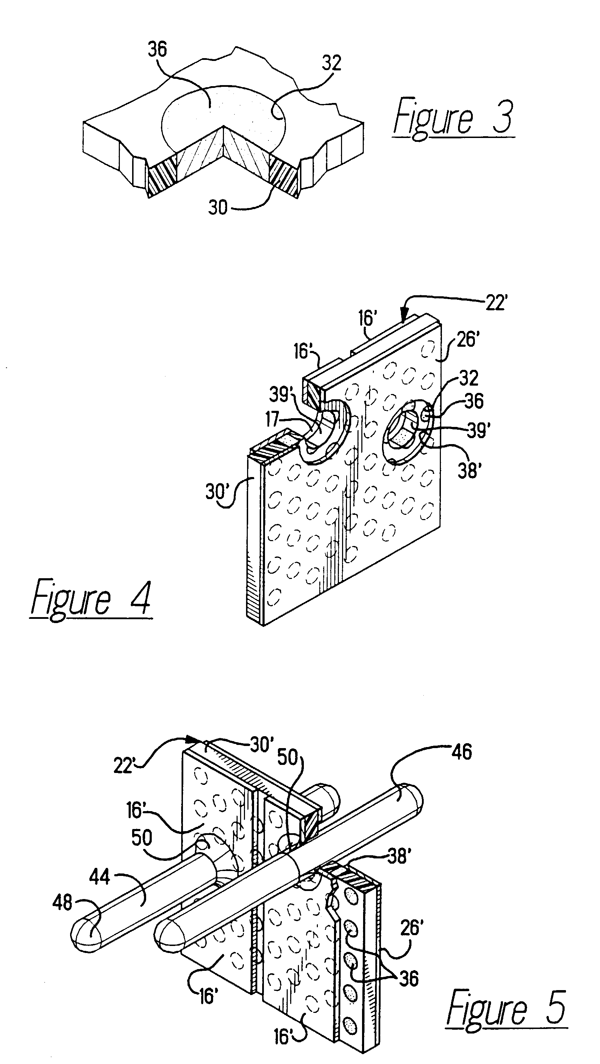

Film or sheet 30 is made to have a series of apertures or holes 32 therein, as seen in FIG. 3. The holes 32 are given a diameter to define an area individually and cumulatively of the matrix of transient suppression material 36 made to fill the holes, material 36 being of a type having predefined voltage breakdown and clamping voltage characteristics as heretofore mentioned. Reference is made to the aforementioned US-A-4,726,991 and US-A-4,977,357 for teachings of various materials of a type that may be used for material 36.

Such material may be 40.6% polymer binder such as medium durometer fluorosilicone rubber, 1.7% crosslinking agent such as CST peroxide, 15.4% hydrated alumina and 42.3% conductive powder such as aluminum particles having an average diameter of 20 microns. Another material may be 31.5% polymer binder, 1.3% cross-linking agent, 14% hydrated alumina as above, and conductive particles such as 42.1% aluminum having an average diameter of 4 microns and 11.1% having an average diameter of 20 microns, totalling 53.2% conductive particle loading.

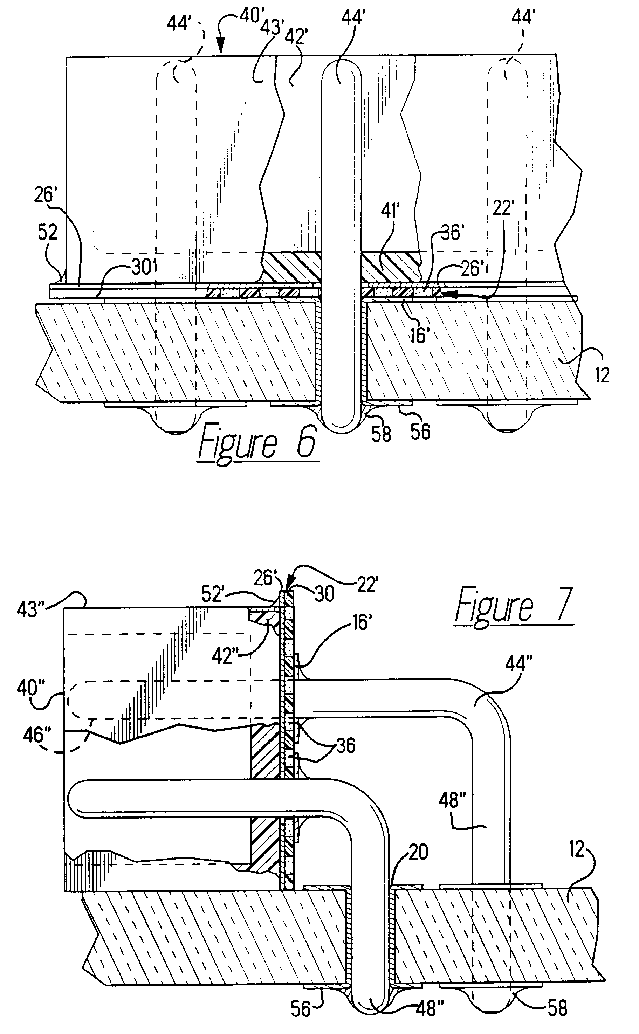

A connector 40, shown in FIG. 1, is brought down onto the upper surface of board 12 with the contacts 44, lower ends 48, inserted through holes 20 and soldered below board 12 to the conductive traces below and extending upward through the holes (see FIGS. 6 and 7), and therefore contacts 44 are electrically connected to the traces 16 on top of the board 12. Connector 40 typically includes a plastic housing 42, a rectangular version being shown in FIG. 1, having contacts 44 including upper post portions 46 extending within the housing and adapted to mate with mating contacts of a mating connector connected to cable or other components or boards or the like. Contacts 44 represent signal contacts and signals are transmitted through the connector to components mounted on board 12 and interconnected to traces 16. Voltage transients Tᵥ arriving at connector 40 on contacts 44 would thus be transmitted along traces 16 to be exposed to the paths through material 36 from 16 to ground via element 22. If the transient voltages exceed the design V_{BD} and V_{C} for the element 22, a low resistance path will develop between the signal paths 16 and the ground path 24,26 resulting in the transient voltages being grounded through the interconnection with ground bus 14 so as not to cause damage or destruction through overstress, either by the electric fields resulting from the voltages or by the energy content of the unwanted voltage components.

As can be appreciated from FIGS. 1 to 3, the number of holes 32, the center-to-center spacing, and the diameter of the holes and sheet thickness determine the area and volume of material 36 in contact with the grounding foil 26 and with the traces 16. The invention contemplates a selection of hole diameter and center-to-center spacing as well as dielectric sheet thickness in conjunction with the area of trace 16 and the area of foil 26 to provide a control of both volume of material 36 and area of engagement with the electrodes formed by 16 and 26. Additionally, there is contemplated a selection of composition of the materials, the matrix materials, in conjunction with these parameters to establish a given voltage response in terms of both V_{BD} and V_{C} relative to the protection of given components.

The sheet 30 may be perforated by mechanically stamping out a pattern of holes 32 with the holes then being filled by drawing material over the surface with a doctor blade or a squeegee, with any excess material being removed from the upper and lower surfaces of the sheet. Thereafter, the sheet may be laminated to the foil electrode 22 with the foil electrode and lamination then applied to the printed circuit board in the manner shown in FIG. 1 and the ends 24 joined to busses 14 as by solder.

FIG. 2 shows an alternative embodiment wherein the electrical overstress protection element 22A is applied over the plated through holes of the printed circuit board (see FIG. 1), appropriate contact-receiving holes 38 being made in the foil 26 and contact-receiving holes 39 made in the sheet 30. With the embodiment shown in FIG. 2, an adjustment in the width of the traces 16, and particularly in the width of foil 26, should be made to hold the area of engagement with material 36 to that required for a given characteristic of operation.

Referring now to FIG. 4, an electrical overstress protection element 22' is shown as a separate entity, apart from a printed circuit board, including similar elements, however. Thus, the grounding foil 26' is shown laminated to a sheet 30' having holes 32 therein filled with material 36 and, in conjunction therewith, a series of signal paths 16' apertured as at 17, which apertures are aligned with the contact-receiving apertures 38' in foil 26' and 39' in sheet 30'. As can be seen in FIG. 5, signal contacts 44 are applied in the contact-receiving apertures of element 22' and joined as by soldering at solder fillets 50 to the signal paths 16'. The contacts 44 have ends 48 that would be fitted through corresponding plated through holes of a printed circuit board (not shown) and soldered to traces thereon and opposite ends 46 would be engaged by mating contacts of a mating connector (not shown). In use of the embodiment shown in FIG. 5, the areas of the ground path foil 26' and of the signal path 16' would be made appropriate for protection desired, independent of the areas of ground buses or signal traces on a printed circuit board. With respect to FIG. 5, it is to be understood that the contact-receiving apertures 38' are made substantially larger than the signal path holes 17 so that ground path foil 26' is not in contact with the signal paths 16' or contacts 44.

Referring now to FIG. 6, an alternative embodiment of the invention is shown with respect to a connector 40' having a housing 42' and a grounding shield 43' extending over substantial portions of the outer surface of housing 42'. As can be seen, contacts 44' extend within the housing in a vertical sense to be engaged by contacts of a mating connector plugged into housing 42'. Housing 42' includes a base 41' through which is fitted the various contacts 44'. Against the undersurface of base 41' an electrical overstress protection element 22', like that shown in FIGS. 4 and 5, is applied; note the various elements 26', 30' and 36' in relation to the signal paths 16' shown in FIG. 6. Also note the relationship of solder interconnection of 16' to 44' and note in FIG. 6 the interconnection to a signal trace 56 on the bottom of board 12 by the contact 44' through solder fillet 58. Shield 43' is grounded as by solder fillet 52 to foil 26', and to a grounding bus, not shown, on board 12.

A signal carried by contacts 44 containing an overvoltage component would result in the voltage being present on signal path 16' with the material 36 effectively grounding such voltage to the ground path via foil 26'.

FIG. 7 shows a further alternative embodiment in the form of a right-angle connector 40'' having elements corresponding to those described with respect to the embodiment of FIG. 6, with the exception that the signal contacts 44'' extend from housing 42'' and are bent at right angles for lower contact ends 48'' to extend through board 12 with the upper contact ends 46" parallel to the upper surface of the board and exposed in a position to be engaged by contacts of a mating connector (not shown). As can be seen in FIG. 7, the outer conductive shell 43" is joined to the bus 26' by being soldered thereto at 52' with respect to connector 40". In that way, excessive voltage levels can be carried off through ground circuits connected to the grounding shell 43".

FIG. 9 illustrates an embodiment of thin element 70 including signal and ground electrodes 72,74 and having a fabric 76 disposed therebetween which is impregnated with material such as material 36 of FIG. 3. Fabric 76 is shown as being woven of discrete threads of dielectric material which may be synthetic material or may be of natural material such as silk, and having a thickness of between 0.00254 cm and 0.254 cm (0.001 and 0.10 inches) such as preferably 0.00508 cm (0.002 inches). The transient suppression material may be impregnated into the fabric, for example, by being placed onto the fabric and being pressed thereunto by revolving cylinders of a two-roll rubber mill or a calender in up to five passes; one electrode may optionally also be pressed onto the thus-impregnated fabric by the same or similar apparatus. The material of fabric 76 may also be of ceramic or refractory material fibers and either woven or nonwoven.

## Claims

1. Combination of a circuit (12) having a ground conductor (26,26') and signal conductors (16,16') and an electrical connector having contacts (44,44',44''), characterized in that the ground conductor (26,26') and the signal conductors (16,16') are generally planar members, the signal conductors (16,16') surround the contacts (44,44',44") in electrical connection therewith whilst the ground conductor (26,26') does not electrically engage the contacts (44,44',44"), and in that a transient electrical suppression material (36,36') is disposed between the signal conductors (16,16') and the ground conductor (26,26'), and is embedded in a dielectric carrier material, the transient electrical suppression material being in electrical contact with the signal conductors (16,16') and the ground conductor (26,26') for creating a voltage clamp in the circuit.

2. The combination claimed in claim 1, characterized in that the electrical suppression material (36,36') is embedded in a synthetic film material (30,30').

3. The combination claimed in claim 2, characterized in that the electrical suppression material (36,36') is embedded in a matrix of holes (32) formed in the film material (30,30').

4. The combination claimed in any one of claims 1 to 3, characterized in that the electrical suppression material (36,36') comprises a combination of a polymer binder, a cross-linking agent, hydrated alumina, and a conductive powder.

5. The combination claimed in any one of claims 1 to 4, characterized in that the connector includes a housing (42,42') with posts (46,48) or contacts (44,44',44") which project through post holes (20) on a circuit board (12) and through holes (39,39') in the film material (30,30').

6. The combination claimed in any one of claims 2 to 6, characterized in that the contacts (44") are bent in a substantial right angle shape.

7. The combination claimed in claim 1, characterized in that the electrical suppression material (36) is arranged in an ordered array of substantially the same shapes.

8. The combination claimed in claim 1, characterized in that the suppression material (36) is suspended in a woven fabric for creating the voltage clamp.

## Patentansprüche

1. Kombination einer Schaltung (12) mit einem Erdleiter (26, 26') und Signalleitern (16, 16') und einem elektrischen Verbinder mit Kontakten (44, 44', 44"), dadurch gekennzeichnet, daß der Erdleiter (26, 26') und die Signalleiter (16, 16') im allgemeinen ebene Glieder sind, die Signalleiter (16, 16') die Kontakte (44, 44', 44") in elektrischer Verbindung damit umgeben, während der Erdleiter (26, 26') nicht in elektrischen Eingriff mit den Kontakten (44, 44', 44") tritt und daß ein elektrisches Störspitzenunterdrückungsmaterial (36, 36') zwischen den Signalleitern (16, 16') und dem Erdleiter (26, 26') angeordnet und in ein dielektrisches Trägermaterial eingebettet ist, wobei sich das elektrische Störspitzenunterdrückungsmaterial im elektrischen Kontakt mit den Signalleitern (16, 16') und dem Erdleiter (26, 26') befindet, um ein Spannungsklemmelement in der Schaltung zu erzeugen.

2. Kombination nach Anspruch 1, dadurch gekennzeichnet, daß das elektrische Unterdrückungsmaterial (36, 36') in einem synthetischen Filmmaterial (30, 30') eingebettet ist.

3. Kombination nach Anspruch 2, dadurch gekennzeichnet, daß das elektrische Unterdrückungsmaterial (36, 36') in einer in dem Filmmaterial (30, 30') ausgebildeten Matrix von Löchern (32) eingebettet ist.

4. Kombination nach einem der Ansprüche 1 bis 3, dadurch gekennzeichnet, daß das elektrische Unterdrückungsmaterial (36, 36') eine Kombination aus einem Polymerbindemittel, einem Vernetzungsmittel, Aluminiumhydrat und einem leitfähigen Pulver umfaßt.

5. Kombination nach einem der Ansprüche 1 bis 4, dadurch gekennzeichnet, daß der Verbinder ein Gehäuse (42, 42') mit Stiften (46, 48) oder Kontakten (44, 44', 44") umfaßt, die durch Stiftlöcher (20) in einer Leiterplatte (12) und durch Löcher (39, 39') im Filmmaterial (30, 30') hervorstehen.

6. Kombination nach einem der Ansprüche 2 bis 6, dadurch gekennzeichnet, daß die Kontakte (44") in einer im wesentlichen rechtwinkligen Form abgebogen sind.

7. Kombination nach Anspruch 1, dadurch gekennzeichnet, daß das elektrische Unterdrückungsmaterial (36) in einer geordneten Anordnung von im wesentlichen denselben Formen angeordnet ist.

8. Kombination nach Anspruch 1, dadurch gekennzeichnet, daß das Unterdrückungsmaterial (36) in einem gewobenen Gewebe suspendiert ist, um das Spannungsklemmelement zu erzeugen.

## Revendications

1. Combinaison d'un circuit (12) ayant un conducteur de masse (26,26') et des conducteurs de signaux (16,16') et d'un connecteur électrique ayant des contacts (44,44',44"), caractérisée en ce que le conducteur de masse (26,26') et les conducteurs de signaux (16,16') sont de manière générale des éléments plans, les conducteurs de signaux (16,16') entourent les contacts (44,44',44") en connexion électrique avec eux tandis que le conducteur de masse (26,26') n'engage pas électriquement les contacts (44,44',44"), et en ce qu'une matière de suppression électrique de transitoires (36,36') est disposée entre les conducteurs de signaux (16,16') et le conducteur de masse (26,26') et est intégrée dans une matière porteuse diélectrique, la matière de suppression électrique de transitoires étant en contact électrique avec les conducteurs de signaux (16, 16') et le conducteur de masse (26, 26') pour créer une fixation du niveau de tension dans le circuit.

2. Combinaison selon la revendication 1, caractérisée en ce que la matière de suppression électrique (36,36') est intégrée dans une matière de film synthétique (30,30').

3. Combinaison selon la revendication 2, caractérisée en ce que la matière de suppression électrique (36,36') est intégrée dans une matrice de trous (32) formée dans la matière de film (30,30').

4. Combinaison selon l'une quelconque des revendications 1 à 3, caractérisée en ce que la matière de suppression électrique (36,36') se compose d'une combinaison d'un liant polymère, d'un agent de réticulation, d'alumine hydratée, et d'une poudre conductrice.

5. Combinaison selon l'une quelconque des revendications 1 à 4, caractérisée en ce que le connecteur comporte un boîtier (42,42') avec des broches (46,48) ou des contacts (44,44',44") qui font saillie à travers des trous de montants (20) sur une carte à circuits (12) et à travers des trous (39,39') dans la matière de film (30,30')

6. Combinaison selon l'une quelconque des revendications 2 à 6, caractérisée en ce que les contacts (44") sont courbés substantiellement en angle droit.

7. Combinaison selon la revendication 1, caractérisée en ce que la matière de suppression électrique (36) est disposée en un réseau ordonné de substantiellement les mêmes formes.

8. Combinaison selon la revendication 1, caractérisée en ce que la matière de suppression (36) est suspendue dans une structure tissée pour créer la fixation de niveau de tension.
